# EUROPÄISCHE PATENTSCHRIFT

(11) **EP 2 523 916 B1**
(45) Veröffentlichungstag und Bekanntmachung des Hinweises auf die Patenterteilung: **23.08.2017**
(21) Anmeldenummer: 11700892.0
(22) Anmeldetag: 14.01.2011
(51) Int. Cl.: C03C 1/00, C03C 17/34, C03C 17/36

(54) **VERBUNDMATERIAL UND VERFAHREN ZU DESSEN HERSTELLUNG**
COMPOSITE MATERIAL AND METHOD FOR THE PRODUCTION THEREOF
PROCÉDÉ DE FABRICATION D'UNE VITRE À SURFACE TEXTURÉE ET VITRE À SURFACE TEXTURÉE

(30) Priorität: 14.01.2010 DE 102010004741
(43) Veröffentlichungstag der Anmeldung: 21.11.2012
(73) Patentinhaber: Schott AG, 55122 Mainz (DE)
(72) Erfinder: HENZE, Inka, 55268 Nieder-Olm (DE); SPENGLER, Stefan, 55257 Budenheim (DE); BOCKMEYER, Matthias, 55116 Mainz (DE); RUDIGIER-VOIGT, Eveline, 55128 Mainz (DE); SWEECK, Tamara, 55583 Bad Münster (DE); GROS, Oliver, 55257 Budenheim (DE); HENN, Christian, 55546 Frei-Laubersheim (DE)
(74) Vertreter: Herden, Andreas F.
(86) Internationale Anmeldenummer: PCT/EP2011/000141
(87) Internationale Veröffentlichungsnummer: WO 2011/085996

(56) Entgegenhaltungen:
- EP-A1- 1 174 258
- EP-A1- 2 327 482
- EP-A2- 1 016 637
- WO-A1-00/10929
- WO-A1-92/14270
- WO-A1-98/26315
- WO-A1-2009/118552
- WO-A1-2010/081531
- WO-A2-99/06873
- WO-A2-2004/104082
- WO-A2-2009/004560
- DE-A1- 4 130 550
- DE-A1- 10 314 070
- DE-U1-202004 015 925
- FR-A1- 2 894 328
- FR-A3- 2 914 630
- JP-A- 2006 150 807
- JP-B2- 2 679 454
- US-A- 5 766 680
- US-A1- 2004 038 081
- US-A1- 2004 191 575
- US-A1- 2005 122 588
- US-A1- 2006 292 345
- KRUG H ET AL: "Fine patterning of thin sol-gel films", JOURNAL OF NON-CRYSTALLINE SOLIDS, NORTH-HOLLAND PHYSICS PUBLISHING. AMSTERDAM, NL, Bd. 147-148, 1. Januar 1992 (1992-01-01), Seiten 447-450, XP022755347, ISSN: 0022-3093, DOI: DOI:10.1016/S0022-3093(05)80656-8 [gefunden am 1992-01-01]

## Beschreibung

### Gebiet der Erfindung

Die Erfindung betrifft ein Verbundmaterial, insbesondere mit einem Glas- oder Glaskeramiksubstrat und einer Beschichtung. Es handelt sich insbesondere um ein zumindest teilweise transparentes Substrat. Weiter betrifft die Erfindung ein Verfahren zur Herstellung eines Verbundmaterials, insbesondere basierend auf einem Glas- oder Glaskeramiksubstrat. Die Erfindung betrifft des Weiteren glaskeramische Gegenstände mit einer dekorativen Anmutung, insbesondere Glaskeramikkochfelder, Backofenscheiben, Architekturgläser, Glasanwendungen im Bereich Unterhaltungselektronik etc.

### Hintergrund der Erfindung

Dekorative Beschichtungen, insbesondere auf der Unterseite von transparenten Glaskeramiken wie Kochfeldern, sind aus der Praxis bekannt.

Beispielsweise können gedruckte Farben oder Lacke, wie beispielsweise Silikonfarben, verwendet werden. Über die Verwendung von Metallpartikeln in dem Lacksystem kann dabei diese auch eine metallische Anmutung aufweisen. Hierzu muss in der Regel eine Schicht mit einer Dicke von mehreren µm aufgebracht werden, wodurch im Bereich der Schicht eine transparente Anmutung, durch die beispielsweise eine Hintergrundbeleuchtung oder ein Display sichtbar wird, nicht mehr gegeben ist.

Das Dokument DE 20 2004 015 925 U1 (Schott AG) zeigt ein Schichtsystem mit metallischer Anmutung. Eine Trägerschicht, welche insbesondere aus Silikon besteht, umfasst Metallpartikel, um eine metallische Anmutung zu erzielen. Das Dokument FR 2 894 328 A1 (Eurokera) zeigt ein Glaskeramikkochfeld mit einer strukturierten Beschichtung. Weiter ist die Gestaltungsfreiheit bei der Verwendung metallisch aussehender Lacke in der Regel begrenzt und es ist bei vielen Anwendungen nicht unbedingt erwünscht, dass die metallische Anmutung genau der einer glatten metallischen Oberfläche entspricht. Zusätzlich ist die Kombination solcher Lacksysteme mit Strukturen im unteren µm-Bereich häufig schwierig, da die metallischen Pigmente häufig größer sind und kein homogenes Farbbild erzeugt werden kann. Insbesondere soll eine farbliche Anpassung zu anderen Oberflächen oder Küchengeräten, wie (Induktions-) Kochflächen, erzielt werden können.

Generell werden beispielsweise im Küchenbereich Oberflächen verwendet, die wie gebürsteter Edelstahl aussehen. Hierzu können beispielsweise Folien verwendet werden. Diese wirken in vielen Fällen jedoch nicht hochwertig und neigen insbesondere bei Temperaturbelastung > 50°C zu Delamination oder zu Verfärbungen.

Alternativ können Edelstahlbleche verwendet werden. Dies ist jedoch relativ kostspielig und ein nahtloser Übergang zwischen einem Glaskeramiksubstrat und einer Edelstahloberfläche ist in der Regel nicht möglich. Weiter kann es zum Eindringen von Feuchtigkeit und Verschmutzung zwischen den Schichten kommen, wodurch die Anmutung erheblich verschlechtert wird.

Bekannte Dekorschichten haben in vielen Fällen nicht die nötige Kratzfestigkeit um als Beschichtung auf der Außenseite verwendet werden zu können. Bei der Verwendung einer metallisch anmutenden Schicht auf der Unterseite einer Glaskeramik entsteht in vielen Fällen ein gelb- oder rotstichiger Farbeindruck, da die Glaskeramik selbst häufig farbstichig sein kann.

Außerdem haben bisherige metallische Schichten in vielen Fällen den Nachteil, dass sie durch Ihre Leitfähigkeit nicht für die Verwendung von kapazitiv oder ähnlich arbeitenden Display- und/oder Touchdisplayanwendungen geeignet sind.

### Aufgabe der Erfindung

Der Erfindung liegt demgegenüber die Aufgabe zugrunde, ein einfaches und kostengünstiges Verfahren zum Aufbringen von Dekorschichten mit hoher Gestaltungsfreiheit bereitzustellen, wobei die Dekorschichten sich insbesondere durch eine hohe Temperaturbeständigkeit auszeichnen.

Es ist eine weitere Aufgabe der Erfindung, Dekorschichten mit guter Anhaftung an dem Substrat sowie hoher Kratzfestigkeit bereitzustellen. Zudem sollten die aufgebrachten Schichten die Festigkeit des Substrats nicht verschlechtern.

Zusätzlich liegt einer Ausführungsform der Erfindung die Aufgabe zugrunde Schichten bereitzustellen, die eine Display- und/oder Touchdisplayfähigkeit besitzen

### Zusammenfassung der Erfindung

Die Aufgabe der Erfindung wird bereits durch ein Verfahren zur Herstellung eines Verbundmaterials mit mindestens zwei Schichten sowie durch ein Verbundmaterial nach einem der unabhängigen Ansprüche gelöst.

Bevorzugte Ausführungsformen und Weiterbildungen der Erfindung sind den jeweiligen Unteransprüchen zu entnehmen.

Die Erfindung betrifft ein Verfahren zur Herstellung eines Verbundmaterials mit mindestens zwei Schichten.

Gemäß der Erfindung wird ein Glas- oder Glaskeramikverbundmaterial verwendet, welches Thermoschock beständig ist und einen thermischen Ausdehnungskoeffizienten (CTE) ≤ 5, bevorzugt ≤ 4 x 10⁻⁶ K⁻¹ (bei 20°C) aufweist, sowie zumindest teilweise transparent ist.

Es kann sich dabei sowohl um ein Material mit hoher Transmission im sichtbaren Bereich wie auch um ein nahezu opakes Material mit nur noch geringer Transmission handeln.

Gemäß der Erfindung wird eine strukturierte Sol-Gel-Schicht, d.h. eine zumindest teilweise anorganische über einen Flüssigphasenprozess aufgebrachte Schicht, aufgetragen.

Auf die strukturierte Schicht wird sodann eine weitere Schicht mittels eines PVD- oder CVD-Abscheideverfahrens, insbesondere mittels eines PVD-Verfahrens, abgeschieden.

Die Erfinder haben herausgefunden, dass sich durch die Kombination einer strukturgebenden Sol-Gel-Schicht in Verbindung mit einer abgeschiedenen, beispielsweise farbgebenden Schicht, eine nahezu beliebige Gestaltungsfreiheit erzielen lässt.

Erfindungsgemäß wird als weitere Schicht eine Schicht mit metallischer Anmutung, insbesondere eine Metallschicht, abgeschieden.

Vorzugsweise wird also über die weitere Schicht ein Dekor auf dem Substrat aufgebracht.

Auch kann eine Lüsterfarbe verwendet werden. Es handelt sich dabei in der Regel um gelöste Metallresinate, aus denen sich bei höheren Temperaturen eine dünne Metalloxydschicht mit farbiger oder metallischer Anmutung bildet.

Auch die Verwendung eines Metall- oder Metalloxydpartikel haltigen Lacks ist denkbar.

Die strukturierte Sol-Gel-Schicht ist vorzugsweise transparent und kann beispielsweise über ein Siebdruckverfahren aufgebracht werden. Bei einer Ausführungsform der Erfindung wird die Sol-Gel-Schicht mittels eines Prägewerkzeuges, insbesondere mittels eines Prägestempels oder einer Walze strukturiert.

Diese Ausführungsform des Verfahrens hat den Vorteil, dass nahezu beliebige Strukturen von einer Masterstruktur, beispielsweise einer gebürsteten Metalloberfläche, abgenommen und auf die Sol-Gel-Schicht übertragen werden können. Die anschließend aufgebrachte weitere Schicht folgt der Struktur der strukturierten Sol-Gel-Schicht bzw. füllt diese aus.

Ein derartiges Verfahren verläuft beispielsweise in folgenden Schritten:
Zunächst wird ein Stempel hergestellt, hierfür wird ein Master benötigt. Dies kann im Fall einer gebürsteten Edelstahloberfläche beispielsweise ein Blech- oder Metallstück mit der gewünschten Struktur sein. Der Master kann gereinigt werden, so dass er fett- und fusselfrei ist.

Sodann wird auf den Master eine Polymermasse, insbesondere eine Silikonvormasse, gegossen und ausgehärtet. Die Aushärtung kann beispielsweise durch Polymerisation, vorzugsweise unter Erwärmung, erfolgen. Möglicherweise entstehende Blasen können durch Unterdruck aus dem System entfernt werden. Die ausgehärteten polymeren Stempel werden sodann von der Vorlage abgezogen und sind nun für den eigentlichen Prägeprozess einsatzbereit. Die Stempel können mehrfach verwendet werden, d.h. nach dem Prägevorgang können diese beispielsweise mittels eines Reinigungsmittels wie Wasser, Ethanol oder Isopropanol gereinigt und so wieder verwendet werden.

Anschließend wird das Glas- oder Glaskeramiksubstrat mit einer Sol-Gel-Schicht beschichtet. Die Sol-Gel-Schicht kann sich aus amorphen und/oder hybridischen und/oder kristallinen Partikeln zusammensetzen. Über die Zusammensetzung der Partikel kann eine Brechzahlanpassung der Schicht an das Substrat und/oder an die darüber liegende Schicht erreicht werden. Für die strukturierte Schicht können dabei Brechzahl im Bereich 1,2 - 1,8, bevorzugt 1,4 - 1,65 realisiert werden. Eine Brechzahlanpassung ist insbesondere dann wichtig, wenn die abgeschiedene Schicht einer Kompensation eines Farbstiches des Substrats dient. Der Vorteil einer Sol-Gel-Schicht ist, dass sie mit nahezu jedem bekannten Flüssigbeschichtungsverfahren aufgebracht werden kann. Vorzugsweise wird die Sol-Gel-Schicht mittels eines Siebdruckverfahrens aufgebracht. Dies hat den Vorteil, dass Bereiche, welche nicht mit einer Dekorschicht versehen werden sollen, ausgespart bleiben können und es entfällt in diesen Bereichen die aufwendige Kontrolle auf Schichtunebenheiten, Inhomogenitäten und Verschmutzungen.

Je nach verwendetem Sol kann dies vor dem Prägen vorgehärtet werden, insbesondere mittels eines photochemischen Prozesses, beispielsweise mittels UV-Strahlung oder thermisch bspw. mittels IR-Strahlung.

Sodann kann die Sol-Gel-Schicht mit dem polymeren Prägestempel kontinuierlich oder statisch geprägt werden. Der Prägestempel kann, wie es bei einer Ausführungsform der Erfindung vorgesehen ist, ebenfalls mit einer Sol-Gel-Schicht versehen sein. Vorzugsweise unter definiertem Druck auf den Prägestempel kann der Verbund thermisch und/oder photochemisch ausgehärtet werden, bevorzugt photochemisch.

Bei einer weiteren Ausführungsform wird ein Sol verwendet, welches sich über Kapillarkräfte von selbst in den Stempel zieht. In einer besonderen Ausführungsform kann der Prägevorgang thixotrop sein.

Nach Entfernen des polymeren Prägestempels ist eine strukturierte Schicht vorhanden, insbesondere mit einer Schichtdicke von 0,01 bis 1 mm.

Die Struktur wird durch die Struktur des Prägestempels vorgegeben, es ist nahezu jede denkbare Struktur, wie beispielsweise periodische oder statistische Strukturen, möglich. Bei Verwendung eines Stempels kann nahezu jedes Oberflächenprofil abgenommen werden, so beispielsweise auch Holzoberflächen, geätzte Oberflächen etc.

Die Strukturtiefe kann in einem Bereich von 100 nm bis 1 mm variieren. Die aufgebrachte strukturierte Schicht ist strukturgebend für die zumindest eine nachfolgende weitere Schicht.

Bei einer bevorzugten Ausführungsform der Erfindung wird die strukturierte Schicht je nach benötigter Temperaturbeständigkeit des Endproduktes, beispielsweise bei Temperaturen von 50 bis 1000°C, bevorzugt 100 bis 500°C, ausgehärtet. Die Struktur bleibt erhalten, auch wenn die organischen Bestandteile des Sols zumindest teilweise entfernt werden, d.h. die Schichten sind entweder nahezu rein anorganisch oder teilweise organisch und können insbesondere. hochtemperaturstabile Si-Methyl- und/oder Si-Phenyl-Gruppen enthalten.

Es kann allerdings passieren, dass die Strukturtiefe in Relation zum Master je nach verwendeter Temperatur und verwendetem Sol, insbesondere je nachdem ob und welche Menge welcher Nanopartikel dem Sol zugegeben ist, abnehmen. So kann es zu einer Reduzierung der Strukturtiefe bis zu 60% kommen. Dies kann gezielt eingestellt werden, um von einem Master verschiedene Strukturtiefen realisieren zu können.

Die resultierende strukturierte SolGel-Schicht kann eine Brechzahl im Bereich 1,2 - 1,8 haben, bevorzugt 1,4 - 1,65. Die Schicht kann porös ausgebildet sein, d.h. es sind Meso- und/oder Mikroporen vorhanden mit einem Porenradius ≤ 10nm, bevorzugt ≤ 5 nm, besonders bevorzugt ≤ 3nm. Die Poren weisen zumeist eine Flaschenhals-Form auf, wobei der Porenradius größer als der Ausgangsradius ist. Die Schichten haben vorzugsweise eine Porosität von 5-50%, besonders bevorzugt 15-30%. Eine Bestimmung der Porenradien als auch die Gesamtporosität kann mittels ellipsometrischer Porosimetrie oder Stickstoff-Sorptionsmessungen bestimmt werden.

Auch die Porosität der Schicht kann aufgrund einer Mischung des Beschichtungsmaterials und Luft eine Brechzahlanpassung erreicht werden.

Als Sol-Gel-Vorstufen können insbesondere hydrolisierte und kondensierte Epoxy- bzw. Methacrylatfunktionalisierte Alkoxysilane verwendet werden, welche insbesondere mit oxydischen Nanopartikeln wie SiO₂ versehen sind. Die Nanopartikel werden vorzugsweise als Dispersion, insbesondere als alkoholische Dispersion, zugesetzt.

Hierdurch kann das Schrumpfen auf 25% oder weniger reduziert werden.

Insbesondere können irregulär geformte faserförmige Partikel, insbesondere Siliziumoxidpartikel, verwendet werden. Der Durchmesser kann 5 bis 15 nm bei einer Länge zwischen 5 und 150 nm betragen.

In anderen Ausführungsformen werden Mischungen von kugelförmigen Partikeln verschiedener Größe, insbesondere von 5 bis 125 nm, zugesetzt. Hierdurch kann insbesondere bei Verwendung von größeren und kleineren Partikelfraktionen eine Selbstorganisation herbeigeführt werden.

Bei einer alternativen Ausführungsform wird ein selbstorganisierendes Sol-Gel verwendet. Es handelt sich dabei um eine selbstorganisierende Schicht, bei der beispielsweise verschiedene Streupartikel, insbesondere in einem Größenbereich von 0,1 bis 1 µm, eingebracht werden und sich aufgrund der unterschiedlichen Partikelgrößen, spätestens beim Trocknen und Kondensieren der Schicht selbst ordnen, derart, dass eine Struktur mit definierter Rauhigkeit entsteht, welche beispielsweise als Streuschicht oder als Schicht mit Anti-Rutsch-Effekt wirken kann.

Die Beschichtung mit einem sogenannten selbstorganisierenden Sol zeigt ebenfalls ein kontinuierliches kostengünstiges und produktionstaugliches Aufbringungsverfahren. Auch das hierfür verwendete Sol setzt sich vorzugsweise aus amorphen und/oder hybridischen und/oder kristallinen Nanopartikeln zusammen. Hinzu kommt vorzugsweise ein Anteil strukturgebender anorganischer Partikel, insbesondere im Größenbereich von 0,1 bis 1 µm. Diese können beispielsweise als Streupartikel dienen. Über die Wahl der unterschiedlichen Partikelgrößen können Rauhigkeit und Streueigenschaften der Schichten eingestellt werden. Auch eine selbstorganisierende Sol-Gel-Schicht kann beispielsweise mittels eines Siebdruckverfahrens aufgebracht werden.

Die Verwendung eines selbstorganisierenden Sols ist insbesondere für Anwendungen, insbesondere dekorative Anwendungen, die eine mattierte Oberfläche aufweisen sollen, geeignet.

Die weitere Schicht wird sodann über einen gasphasenbasierten Abscheideprozess, vorzugsweise über einen PVD-oder CVD-Prozess, besonders bevorzugt über einen SputterProzess, aufgebracht. Diese Schicht kann vollflächig aufgebracht oder strukturiert, im Sinne von Teilflächen. Für letzteres werden dem Fachmann bekannte Verfahren verwendet, wie Abziehfolien oder ähnliches.

Über PVD (Physical Vapour Desposition) und CVD (Chemical Vapour Deposition) lässt sich in vielen Fällen auf besonders einfache Weise Material eines Targets oder Precursors auf das Substrat übertragen. Bei einem Sputterprozess kann gegebenenfalls bei Verwendung eines Metalltargets das Material unter Zusatz von O₂-Gas oxidiert werden und so eine Oxydschicht aufgebracht werden. Dieser Prozess kann auch mit anderen Zusätzen erzielt werden und wird als sog. reaktives Sputtern bezeichnet.

Neben Oxiden können auch Nitride oder elementare Schichten herangezogen werden. Insbesondere können folgende Elemente bzw. Verbindungen verwendet werden: Si, Ge, Al, Mn, Fe, Zn, Ni, Cr, Ti, Mo, Ag, NiCr, NiCrSi (sog. Thermax Edelstahl) und/oder Legierungen bzw. Kombination daraus.

Bei einer weiteren Ausführungsform werden Metallcluster mit metallischer Anmutung in nanopartikulärer Form in die gesputterte Schicht eingebracht bzw. eingebettet.

Problematisch, insbesondere bei dieser Ausführungsform der Erfindung, ist eine mögliche Farbabweichung des entstehenden Verbundmaterials durch den sogenannten Yellowness-Index der Glaskeramik sowie die thermische Beständigkeit, insbesondere von metallischen Schichten, da es bei Temperaturbelastungen > 100°C zu Oxidation kommen kann.

Die Erfinder haben herausgefunden, dass zumindest eine weitere mittels eines Abscheideverfahrens aufgebrachte Schicht als Farbanpassungsschicht dienen kann, also beispielsweise die Gelbstichigkeit des Glaskeramiksubstrats kompensieren kann.

Bei Wahl einer geeigneten Farbanpassungsschicht, insbesondere bei Auswahl einer Schicht mit einer Dispersion n > 1,55 zusammen mit der farbigen Transmission der Glaskeramik kann eine gleichmäßige Transmission ohne Farbanmutung erzielt werden oder ein gezielter anderer Farbstich, wie bspw. eine Blautönung.
Unter einer farblosen oder farbangepassten Anmutung wird insbesondere eine Transmission verstanden, bei der beim Durchgang von weißem Licht das transmittierte, also das durchgelassene Licht im L*a*b**-Farbraum auf der a* und/oder b*-Achse einen Absolutwert von unter 20, vorzugsweise von unter 10, vorhanden ist. So hat eine bevorzugte Ausführungsvariante des Verbundmaterials weder im Grünen noch im Roten noch im Blauen oder Gelben einen Farbstich.

Dies kann beispielsweise erreicht werden mit einer Si₃N₄ oder einer SiOₓN_{y}-Schicht mit einer Schichtdicke im Bereich beispielsweise von 40 bis 500 nm, insbesondere im Bereich von 75 bis 97 nm.

Neben einzelnen Schichten sind auch zweischichtige oder mehrschichtige Systeme zur Reduzierung der Glaskeramikeigenfarbe aus folgenden Materialien möglich: SiₓN_{y}, SiOₓN_{y}, TiO₂, ZrO₂, Y₂O₃, MgF₂, Al₂O₃, Nb₂O₅, Ta₂O₅ CeO₂ und/oder SiO₂.

Auch eine Kombination aus hoch brechenden und niedrig brechenden Schichten wie Titanoxid und Siliziumoxid ist denkbar.

Bei einer weiteren Ausführungsform der Erfindung kann die Farbschicht, insbesondere wenn diese über einer metallisch anmutenden, insbesondere einer Metall- oder Metalloxidschicht aufgebracht ist, als zusätzliche Gasbarriere dienen und so eine thermische Beständigkeit bis 800°C sicherstellen.

Um zu verhindern, dass sich die Schicht zur Kompensation eines Farbstiches des Substrates bei thermischer Belastung nicht bzw. nur wenig verändert, wird optional zumindest eine weitere Schicht, bevorzugt eine Barriereschicht, bei hoher Ionenenergie gesputtert und das Substrat vor dem Sputtern erhitzt. Typische Ionenenergien sind hierbei > 10 eV, bevorzugt > 20 eV, und Temperaturen zur Substratheizung im Bereich 100 - 600 °C, bevorzugt 200 - 400 °C.

Da viele metallische Beschichtungen bei Atmosphäre bei hohen thermischen Belastungen degradieren können, ist eine weitere Beschichtung als Barrierebeschichtung auf der farbgebenden bzw. farbkompensierenden und/oder der metallischen Schicht sinnvoll. Hierbei kann diese Schicht auch in Form einer Hartstoffschicht ausgebildet sein.

Dabei kann es sich beispielsweise um Silizium, Aluminium, Titan, Zinn, Zirkon, Cerium oder deren Oxide, Nitride oder Oxinitride handeln. Insbesondere bieten sich auch Siliziumoxid, Siliziumoxidnitrid oder Siliziumnitrid als Barriereschichten an. Um einen dauerhaften Schutz zu gewährleisten sind Barriereschichtdicken zwischen 50 und 500, vorzugsweise zwischen 100 und 250 nm, sinnvoll.

Bei einer weiteren Ausführungsform der Erfindung ist zwischen dem Glaskeramiksubstrat und der Sol-Gel-Schicht eine weitere Schicht vorhanden, welche insbesondere ebenfalls mittels eines PVD-Verfahrens, insbesondere mittels eines Sputter-Verfahrens, aufgebracht wurde. Diese Schicht hat vorzugsweise einen CTE < 5*10⁻⁶*K⁻¹.

Die Schicht dient als Haftvermittler für die Sol-Gel-Schicht und alle weiteren Schichten. Auch diese Schicht kann, wie es bei einer Weiterbildung der Erfindung vorgesehen ist, farbig sein und so als Farbanpassungsschicht dienen.
Bei einer Weiterbildung der Erfindung wird, um eine touchfähige Schicht bereitstellen zu können, insbesondere bei Verwendung von kapazitiven und/oder induktiven Schaltern hinter Bedienblenden eine dünne Schicht mit hohem spezifischem Widerstand aufgetragen. Da rein metallische Schichten in der Regel so dünn ausgestaltet sein müssten, dass die Transparenz für viele Anwendungsfälle zu hoch ist, können hierfür Halbleitermaterialien wie Silizium oder Germanium verwendet werden. Insbesondere wird ein Halbleitermaterial verwendet, welches bei Raumtemperatur einen spezifischen Widerstand von über 1*10³, vorzugsweise 1*10⁶ Ω mm²/m, aufweist.

So kann beispielsweise eine touchfähige, blickdichte Schicht mit der Anmutung von Edelstahl, insbesondere gebürstetem Edelstahl, bereitgestellt werden. Auch Halbleitermaterialien in dotierter Form sind denkbar, z.B. mit Aluminium, Bor oder Phosphor.

Um die Beständigkeit des Schichtverbundes gegenüber Öl, Wasser, Kleber, Säuren oder Zuckerverbindungen zu verbessern, kann, wie es bei einer Weiterbildung der Erfindung vorgesehen ist, eine Versiegelung aufgebracht werden, insbesondere mit einer oder mehreren bevorzugt temperaturstabilen Sol-Gel-Schicht und/oder Glasfluss und/oder Phenyl- oder Methyl-polysiloxan-Schicht. Weiter kann die Schicht mit anorganischen Füllstoffen, insbesondere pyrogenen oder gefällten anorganischen Materialien, pigmentiert werden und/oder mittels Mica/Glimmer und/oder Graphit und/oder anorganischen Pigmenten, insbesondere Schwarzpigmenten. Überraschenderweise kann ein Schichtverbund mit einer solchen Versiegelung eine Kratzfestigkeit größer 300g, bevorzugt größer 500g in dem Fachmann bekannten Bosch Siemens Hausgeräte -Test erfüllen.

Weiter kann die zumindest teilweise anorganisch ausgebildete Schicht oder die abgeschiedene Schicht der Erhöhung der Oberflächenhärte des Verbundmaterials dienen.

Bei einer Ausführungsform der Erfindung ist das Verbundmaterial zumindest teilweise transparent, so dass beispielsweise Infrarotsensoren hinter dem Verbundmaterial angeordnet werden können. Vorzugsweise ist in diesem Bereich keine Versiegelung vorhanden.

Es hat sich herausgestellt, dass die erfindungsgemäßen Schichtsysteme die Festigkeit einer Glaskeramik nicht verändern.

Da mittels eines PVD- oder CVD-Verfahrens ein Abscheiden von Schichten, auch bei relativ niedriger Substrattemperatur möglich ist, eignet sich die Erfindung auch für transparente Kunststoffe, wie Polycarbonate, Polyacrylate, Polyolefine, insbesondere cycloolefinische Copolymere. Neben einer Verwendung im Bereich von Weißwaren (beispielsweise Küchengeräte) kann das erfindungsgemäße Verbundmaterial auch im Innenbereich und als Architekturglas verwendet werden, zusätzlich sind auch Anwendungen im Bereich der Unterhaltungselektronik denkbar.

### Kurzbeschreibung der Zeichnungen

Bezugnehmend auf Fig. 1 bis Fig. 5 soll anhand eines schematisch dargestellten Ausführungsbeispiels ein Verfahren zur Herstellung eines Verbundmaterials mit metallischer Anmutung näher erläutert werden.
Fig. 6 zeigt schematisch ein Flussbild eines Ausführungsbeispiels eines Verfahrens zum Herstellen eines Verbundmaterials mit der Anmutung von gebürstetem Edelstahl.
Fig. 7 und Fig. 8 zeigen Transmissionsverläufe eines Verbundmaterials mit und ohne eine farbige Schicht zur Kompensation des Farbstiches des Substrates.
Fig. 9 und Fig. 10 zeigen beispielhafte Schichtaufbauten für eine edelstahlanmutende Glaskeramikbeschichtung (Fig. 9) sowie für eine touchfähige Glaskeramikbeschichtung mit Edelstahlanmutung (Fig. 10).
Bezugnehmend auf Fig. 11 soll die Farbanmutung verschiedener Schichtsystem nach Temperaturbelastung erläutert werden.

### Detaillierte Beschreibung der Zeichnungen

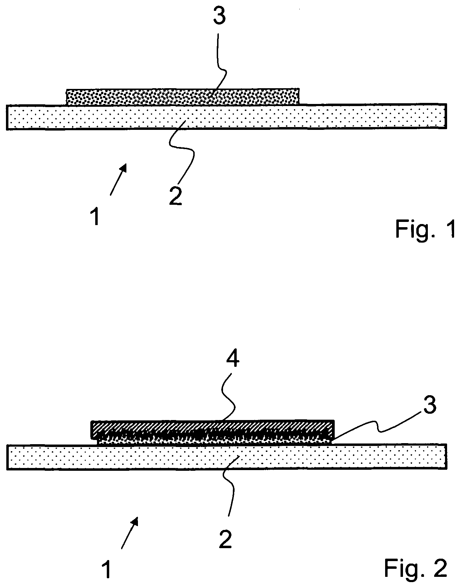

Fig. 1 zeigt ein Verbundmaterial 1, welches ein Substrat 2 umfasst, auf das abschnittsweise als zu strukturierende Schicht eine Sol-Gel-Schicht 3 aufgetragen ist.

Wie in Fig. 2 dargestellt, wird die Sol-Gel-Schicht 3 mittels eines Prägewerkzeugs 4, welches auf die Schicht gedrückt wird, strukturiert.

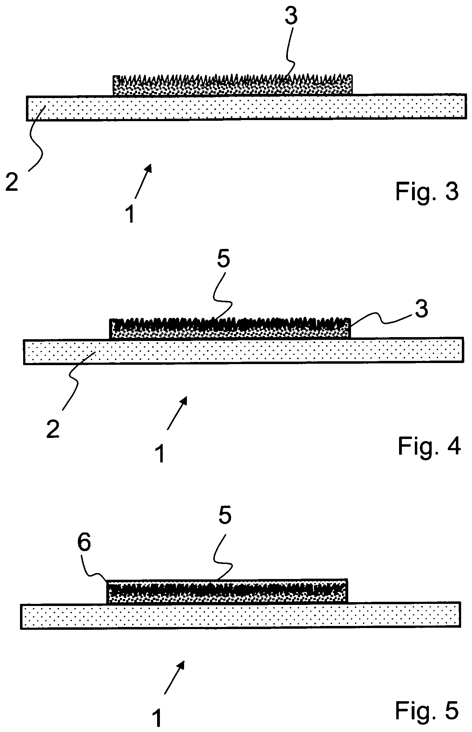

Die strukturierte Sol-Gel-Schicht 3 ist in Fig. 3 dargestellt. Vorzugsweise ist die geprägte Struktur der Struktur einer gebürsteten Edelstahlfläche ähnlich.

Sodann wird, wie in Fig. 4 dargestellt, eine Metallschicht 5 auf die strukturierte Sol-Gel-Schicht 3 über ein Sputterverfahren aufgebracht und es entsteht eine Beschichtung mit metallischer Anmutung.

Zur Korrektur eines Farbstiches des Substrats kann zwischen strukturierte Schicht und Metallschicht noch eine weitere Schicht aufgebracht werden, die zur einer im Wesentlichen farblosen Transmission und/oder gewünschten Farbanpassung führt.

Als Prägewerkzeug kann beispielsweise ein Prägestempel verwendet werden.

Die Sol-Gel-Schicht kann beispielsweise mittels Flüssigbeschichten auf einem Glas- oder Glaskeramiksubstrat aufgebracht werden. Vorzugsweise umfasst die Sol-Gel-Schicht amorphe und/oder hybridische und/oder kristalline Partikel. Über die Partikel und das Sol kann eine Brechzahlanpassung der Schicht an das Substrat 2 oder über weitere darüber liegende Schichten (nicht dargestellt) bereitgestellt werden.

Vorzugsweise wird die Sol-Gel-Schicht 3 mittels eines Siebdruckverfahrens aufgebracht. So können Bereiche, welche nicht strukturiert werden sollen, ausgespart werden und freie Bereiche, welche beispielsweise für ein Display oder eine Bedienfläche benötigt werden, sind nicht mit der Sol-Gel-Schicht versehen und es entfällt in diesen Bereichen eine aufwändige Kontrolle von Schichtunebenheiten, Inhomogenitäten und/oder Verschmutzungen.

Bei einer Ausführungsform der Erfindung wird die Sol-Gel-Schicht 3 vorgehärtet, insbesondere mittels eines photochemischen Prozesses.

Das Prägewerkzeug 4 ist vorzugsweise als Prägestempel ausgebildet, welcher kontinuierlich, insbesondere als Rolle oder als Flächenprägestempel auf die Sol-Gel-Schicht unter einem definierten Druck aufgedruckt wird. Bei einer Ausführungsform der Erfindung wird während des Aufdruckens die Sol-Gel-Schicht 3 gehärtet, insbesondere thermisch oder photochemisch. Insbesondere wenn ein relativ dünnflüssiges Sol verwendet wird, muss der Prägestempel nicht mit einer besonders hohen Kraft aufgedrückt werden, sondern das Sol zieht sich fast von alleine in die Struktur des Prägestempels. Sofern sich zwischen Prägestempel und Sol Blasen bilden, können diese, mittels einer Walze oder mittels Unterdruck entfernt werden.

Als Struktur, unter der insbesondere ein dreidimensionales Oberflächenrelief verstanden wird, kommen sowohl periodische als auch statistische Strukturen in Frage, insbesondere Linien, gebürstete Oberflächen, lichtstreuende Schichten, geätzte Oberflächen, Strukturen die der besseren Haptik dienen sowie einfache geometrische Körper, wie Pyramiden, invertierte Pyramiden, Würfel, Sphären etc.

Die strukturierte Sol-Gel-Schicht ist in einer besonderen Ausführungsform strukturbestimmend für nachfolgend abgeschiedene Schichten, insbesondere für die erfindungsgemäß aufgetragenen metallhaltigen Schichten, sowie optional noch folgende weiteren Schichten bzw. Zwischenschichten.

Die strukturierte Sol-Gel-Schicht 3, welche mit einer Metallschicht 5 versehen ist, wird unter anderem je nach benötigter Temperaturbeständigkeit des Endprodukts bei Temperaturen von 50 bis 1000°C, bevorzugt von 100 bis 800°C, gehärtet.

Die Struktur bleibt selbst dann erhalten, wenn organische Bestandteile der Sol-Gel-Schicht vollständig ausgebrannt werden.

Die Tiefe der Struktur in Relation zur Struktur des Prägewerkzeugs nimmt je nach Temperatur und verwendetem Sol-Gel, welches insbesondere Partikel enthält, zwischen 0 und 60 % ab. Dies kann, falls erforderlich, dadurch kompensiert werden, dass ein Prägewerkzeug verwendet wird das eine höhere Strukturtiefe aufweist als die beabsichtigte Strukturtiefe.

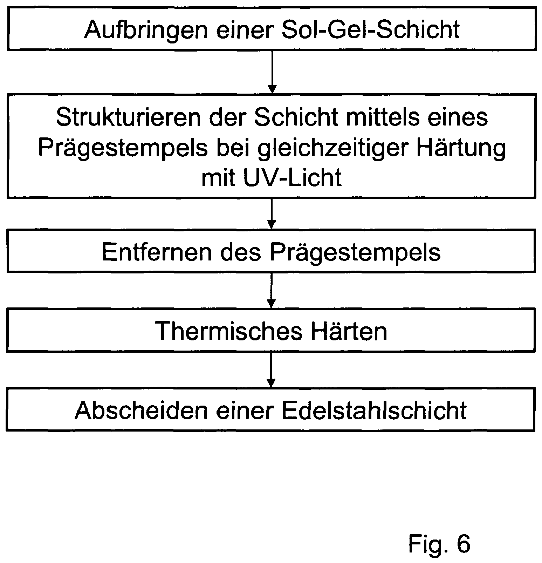

Fig. 6 zeigt schematisch ein Flussbild mit den wesentlichen Verfahrensschritten.

Zunächst wird eine Sol-Gel-Schicht aufgebracht. Die aufgebrachte Sol-Gel-Schicht wird mittels eines Prägestempels bei gleichzeitiger Härtung mit UV-Licht strukturiert. Sodann wird der Prägestempel entfernt und anschließend das Verbundmaterial thermisch gehärtet.

Schließlich wird eine Edelstahlschicht mittels eines Sputterverfahrens aufgebracht. Gegebenenfalls können noch weitere Schichten aufgebracht werden.

Im Detail lässt sich ein erfindungsgemäßes Verbundmaterial beispielsweise wie folgt herstellen:

### Beispiel 1:

In einem Gefäß werden 22,3 g (0,08 mol) GPTES (Glycidyloxypropyloxytriethoxysilan) mit 4,1 g (0,02 mol TEOS (Tetraethoxysilan) vorgelegt und mit 2,3 g Wasser in welchem 0,344 g PTSH (Paratoluolsulfonsäure) gelöst sind hydrolisiert.

Nach 2 Min. Rühren werden diesem Hydrolysat 110 g einer 15 mass-% alkoholischen Dispersion von irregulär geformten SiO₂-Nanopartikel in Isopropanol gegeben. Die Nanopartikel haben beispielsweise eine Faserform mit einem Durchmesser von 5 -15 nm und einer Länge von 30- 150 nm. Zu dieser Lösung werden 13 g Ethylenglycolmonoethylether gegeben und das leicht flüchtige Lösungsmittel bei 100 mbar und 50 °C Badtemperatur am Rotationsverdampfer entfernt. Dem Prägesol werden anschließend 0,6 g des kationischen Photostarters Irgacure 250 in 1 g Ethylenglycolmonoethylether zugegeben. Mittels Siebdruck unter Verwendung eines 187er Gewebes können mit dem Lacksystem einseitig Schichten auf Kalknatronglas aufgebracht werden.

Nach Abtrocknen des Lösungsmittels bei RT - 50 °C mit oder ohne Umluft wird ein strukturierter Silikonstempel (PDMS) aufgebracht und die Schicht anschließend mittels einer UV-Lampe durch den Stempel ausgehärtet. Nach Entfernen des Stempels ist die Struktur des Stempels in den Nanopartikelfunktionalisierten Lack übertragen worden.

Optional können die Schichten sodann bei Temperaturen von 300 - 500 °C thermisch ausgehärtet werden. Bevorzugt wird dabei eine Heizrate von 3 K/min mit einer Haltezeit von 1 h bei 500 °C. Die Endschichtdicke beträgt 2 - 3 µm.

Anschließend wird über ein Sputterverfahren eine mindestens 100 nm dicke Edelstahlschicht aufgebracht.

Es entsteht so ein temperaturbeständiges Verbundmaterial mit der Anmutung von gebürstetem Edelstahl.

### Beispiel 2:

In einem Gefäß werden 16,7 g (0,06 mol) GPTES (Glycidyloxypropyloxytriethoxysilan) mit 4,1 g (0,02 mol TEOS (Tetraethoxysilan) und 3,56 g (0,02 mol) MTEOS (Methyltriethoxysilan) vorgelegt und mit 2,3 g Wasser, in welchem 0,344 g PTSH (Paratoluolsulfonsäure) gelöst sind, hydrolysiert.

Nach 2 Min. Rühren werden diesem Hydrolysat eine Mischung aus 44 g einer 30 mass-% alkoholischen Dispersion von kugelförmig geformten SiO₂-Nanopartikel mit einem Durchmesser von 40 - 50 nm in Isopropanol und 11 g einer alkoholischen Dispersion von kugelförmigen Si02-Nanopartikeln mit einem Durchmesser von 10 - 15 nm gegeben. Zu dieser Lösung werden 16 g Ethylenglycolmonoethylether gegeben und das leicht flüchtige Lösungsmittel bei 100 mbar und 50 °C Badtemperatur am Rotationsverdampfer entfernt. Dem Prägesol werden anschließend 0,6 g des kationischen Photostarters Irgacure 250 in 1 g Ethylenglycolmonoethylether zugegeben.

Mittels Siebdruck unter Verwendung eines 187er Gewebes können mit dem Lacksystem einseitig Schichten auf transparente Glaskeramiksubstrate aufgebracht werden.

Nach Abtrockenen des Lösungsmittels bei RT - 50 °C mit oder ohne Umluft wird ein strukturierter Silikonstempel (PDMS) aufgebracht und anschließend die Schicht mittels einer UV-Lampe durch den Stempel ausgehärtet. Nach Entfernen des Stempels ist die Struktur des Stempels in den Nanopartikelfunktionalisierten Lack übertragen worden.

Optional können die Schichten sodann bei Temperaturen von 300 - 500 °C thermisch ausgehärtet werden. Bevorzugt wird eine Heizrate von 3 K/min mit einer Haltezeit von 1 h bei 500 °C. Die Endschichtdicke beträgt 1,5 um.

Anschließend wird über das Sputterverfahren zunächst eine farbanpassende Schicht aus SiN mit einer Schichtdicke von 80nm, eine mindestens 100 nm dicke Edelstahlschicht und als oberste Schicht eine Barriereschicht aus SiO₂ aufgebracht.

Man erhält so ein Verbundmaterial das bei Transmission keinen Farbstich aufweist bzw. den Gelbstich des Substrats kompensiert und welches eine hohe Kratzfestigkeit hat. Zusätzlich ist die metallische Schicht vor Oxidation geschützt.

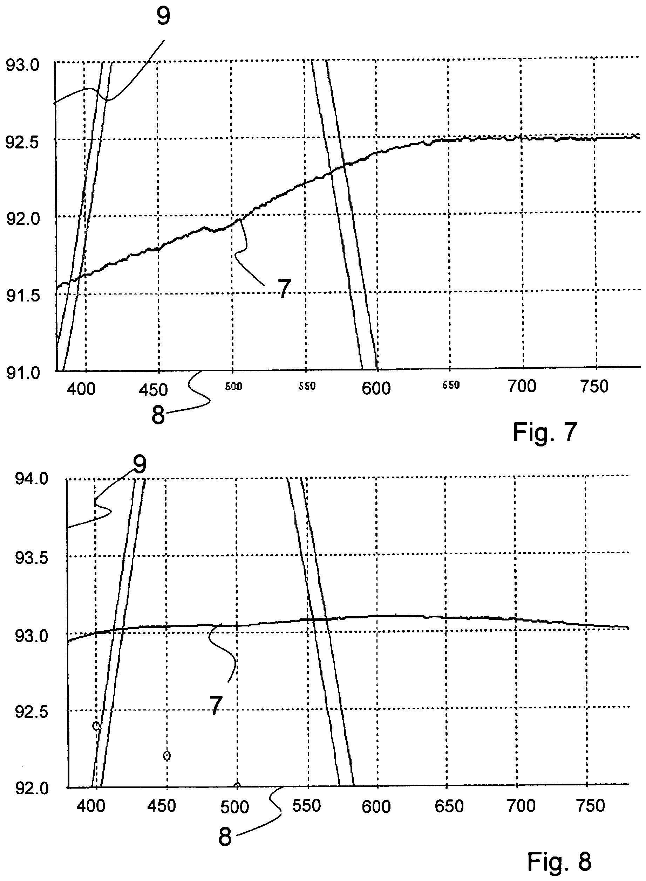

Fig. 7 zeigt den Transmissionsverlauf einer bekannten unbeschichteten Glaskeramik. Auf der X-Achse 8 ist die Wellenlänge in nm und auf der Y-Achse 9 die Transmission 7 in % angegeben.

Zu erkennen ist, dass die Transmission bei 400 nm von etwas über 91,5% auf 92,5% bei 650 nm kontinuierlich ansteigt. Demzufolge ist das Glaskeramikmaterial gelbstichig.

Fig. 8 zeigt entsprechend Fig. 7 den Transmissionsverlauf einer mit einer Farbanpassungsschicht beschichteten Glaskeramik.

Zu erkennen ist, dass der Transmissionsverlauf 7 in den Wellenlängenbereich von 400 bis 750 nm im Wesentlichen um 93% herum verläuft, mithin hat das Verbundmaterial keinen sichtbaren Farbeindruck.

In diesem Ausführungsbeispiel wurde die Farbanpassung dadurch erreicht, dass die Transmission im gesamten sichtbaren Bereich im Wesentlichen auf denselben Wert gebracht wurde.

Es versteht sich, dass es auch denkbar ist, stattdessen einen gewünschten, nicht konstanten Transmissionsverlauf herbeizuführen, bei welchem über einzelne Peaks der Farbanpassungsschicht eine Spektralverteilung erreicht wird, welche für das menschliche Auge im Wesentlichen farblos ist, insbesondere sowohl auf der a*-Achse als auch auf der b*-Achse im L*a*b*-Farbraum einen Absolutwert von unter 10 einnimmt.

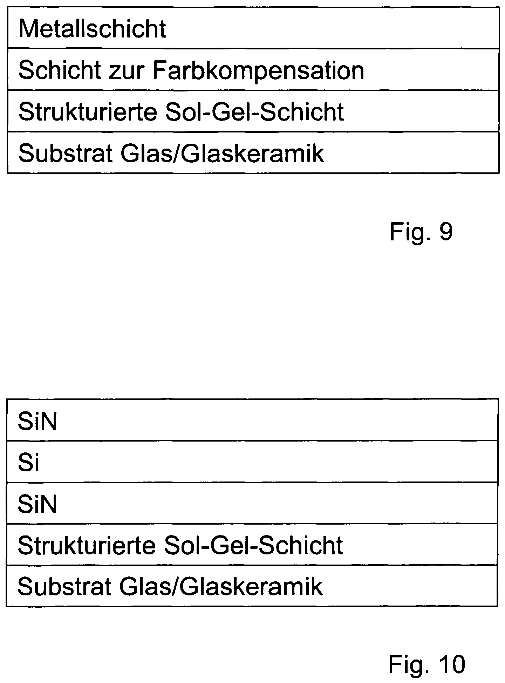

Fig. 9 zeigt einen beispielhaften Schichtaufbau für ein Verbundmaterial mit metallischer Anmutung, insbesondere mit der Anmutung von gebürstetem Edelstahl.

Auf ein Glas- oder Glaskeramiksubstrat ist zunächst eine strukturierte Sol-Gel-Schicht aufgetragen, sodann folgt eine Schicht zur Farbkompensation. Auf dieser Schicht ist eine Metallschicht aufgebracht.

Diese Ausführungsform der Erfindung eignet sich insbesondere zur Unterseitenbeschichtung bzw. zur Verwendung des Schichtsystems auf der dem Betrachter abgewandten Seite.

Die strukturierte Sol-Gel-Schicht hat die Funktion einer Strukturierung für die folgenden Schichten. Die Schicht zur Farbkompensation eines Gelbstiches des Glas- oder Glaskeramiksubstrates ist in diesem Ausführungsbeispiel zwischen der Metallschicht und der strukturierten Schicht angeordnet.

Es versteht sich, dass aber auch eine andere Ausgestaltung denkbar ist, bei welcher die Schicht zur Farbkompensation zwischen dem Glaskeramiksubstrat und der strukturierten Sol-Gel-Schicht angeordnet ist.

Fig. 10 zeigt einen alternativen Schichtaufbau, welcher insbesondere für eine touchfähige und edelstahlanmutende Unterseitenbeschichtung vorgesehen ist. Auch bei diesem Ausführungsbeispiel ist auf dem Glaskeramiksubstrat zunächst eine strukturierte Sol-Gel-Schicht aufgetragen. Es folgt eine Siliziumnitridschicht, welche der Farbkompensation dient.

Zur Erzeugung einer metallischen Anmutung folgt eine Halbleiterschicht, in diesem Ausführungsbeispiel aus Silizium, welche aufgrund des hohen elektrischen Widerstandes auch die Anbringung von kapazitiven Schaltelementen hinter dem Verbundmaterial ermöglicht.

Sodann folgt eine weitere Siliziumnitridschicht, welche eine hinreichende Temperaturbeständigkeit des Verbundmaterials für beispielsweise Glaskeramikkochplatten oder Ofensichtfenster sicherstellt.

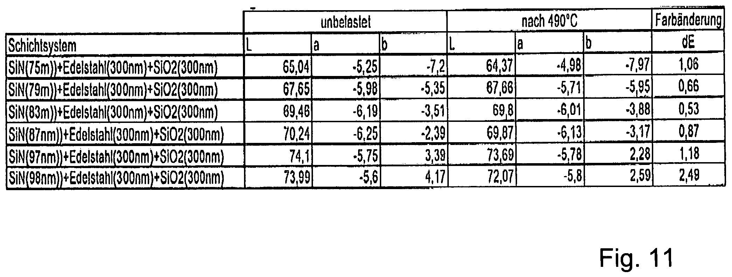

Die Tabelle gemäß Fig. 11 zeigt den Farbeindruck verschiedener Verbundmaterialien vor und nach einer Temperaturbelastung.

Es handelt sich dabei um auf einer Glaskeramik aufgebrachte Schichtsysteme mit metallischer Anmutung bei welchen als Farbanpassungsschicht zunächst eine Siliziumnitridschicht in verschiedenen Dicken aufgetragen wurde auf die sodann eine 300 nm dicke Edelstahlschicht und als Barriereschicht eine 300 nm dicke Siliziumoxidschicht aufgebracht wurde.

Die Koordinaten des L*a*b*-Farbraums sind im unbelasteten Zustand sowie nach einer Temperaturbelastung von 490°C aufgetragen. Zu erkennen ist, dass die Helligkeit (L*-Achse) tendenziell mit zunehmender Dicke der Siliziumnitridschicht leicht abnimmt. Die Absolutwerte auf der a*- und b*-Achse liegen sowohl bei den unbelasteten als auch bei den mit einer Temperatur von 490°C belasteten Mustern stets bei unter 8.

Weiter zu erkennen ist, dass die Farbänderung dE maximal einen Wert von etwa 2,5 annimmt, d.h. die Farbanmutung des Verbundmaterials hat sich auch nach Temperaturbelastung nicht oder nur kaum sichtbar geändert.

Durch die Erfindung können temperaturbeständige Verbundmaterialien mit nahezu beliebiger optischer Anmutung auf sehr einfache Weise hergestellt werden.

## Patentansprüche

1. Verfahren zur Herstellung eines Glas- oder Glaskeramik-Verbundmaterials mit mindestens zwei Schichten, umfassend die Schritte:
- Bereitstellen eines Glas- oder Glaskeramik-Substrats mit einem thermischen Ausdehnungskoeffizienten α ≤ 5 x 10⁻⁶ K⁻¹ (bei 20 °C),
- Aufbringen einer Sol-Gel-Schicht auf dem Substrat, wobei dem für die Sol-Gel-Schicht verwendeten Material Nanopartikel zugesetzt werden,
- Strukturieren der Sol-Gel-Schicht,
- thermisches Härten der strukturierten Sol-Gel-Schicht,
- Aufbringen zumindest einer weiteren Schicht mittels eines Abscheideverfahrens auf die strukturierte Sol-Gel-Schicht, wobei als die weitere Schicht eine Schicht mit metallischer Anmutung abgeschieden wird.

2. Verfahren zur Herstellung eines Verbundmaterials nach dem vorstehenden Anspruch, **dadurch gekennzeichnet, dass** die weitere Schicht mittels eines PVD- oder CVD-Verfahrens abgeschieden wird.

3. Verfahren zur Herstellung eines Verbundmaterials nach einem der vorstehenden Ansprüche, **dadurch gekennzeichnet, dass** als weitere Schicht eine Schicht mit zumindest einem Halbleitermaterial abgeschieden wird.

4. Verfahren zur Herstellung eines Verbundmaterials nach dem vorstehenden Anspruch, **dadurch gekennzeichnet, dass** die Sol-Gel-Schicht vor dem Strukturieren vorgehärtet wird, insbesondere thermisch oder mittels eines photochemischen Prozesses.

5. Verfahren zur Herstellung eines Verbundmaterials nach einem der vorstehenden Ansprüche, **dadurch gekennzeichnet, dass** dem für die strukturierte Schicht verwendeten Material Nanopartikel, insbesondere mit einer mittleren Partikelgröße zwischen 0,1 und 1 µm, zugesetzt werden.

6. Verfahren zur Herstellung eines Verbundmaterials nach einem der vorstehenden Ansprüche, **dadurch gekennzeichnet, dass** die strukturierte Schicht bei 50 bis 1000 °C, bevorzugt bei 100 bis 500 °C thermisch gehärtet wird.

7. Verfahren zur Herstellung eines Verbundmaterials nach einem der vorstehenden Ansprüche, **dadurch gekennzeichnet, dass** die strukturierte Schicht mittels eines Prägewerkzeugs, insbesondere mittels eines Prägestempels oder einer Walze, hergestellt wird.

8. Verfahren zur Herstellung eines Verbundmaterials nach einem der vorstehenden Ansprüche, **dadurch gekennzeichnet, dass** das Volumenverhältnis von Partikeln zu Vorprodukt der strukturierten Schicht 0,1 bis 0,9, bevorzugt 0,5 bis 0,8 beträgt.

9. Küchengerät, umfassend ein Verbundmaterial, wobei das Verbundmaterial ein Glas- oder Glaskeramiksubstrat umfasst, auf welchem eine zumindest teilweise anorganisch ausgebildete Schicht angeordnet ist, wobei die zumindest teilweise anorganisch ausgebildete Schicht strukturiert ist, wobei die zumindest teilweise anorganisch ausgebildete Schicht Nanopartikel enthält, wobei die zumindest teilweise anorganisch ausgebildete Schicht aus einem Sol entstanden ist und wobei auf der anorganisch ausgebildeten Schicht eine weitere Schicht mittels eines PVD- oder CVD-Verfahrens abgeschiedene Schicht angeordnet ist, wobei die weitere Schicht eine metallische Anmutung hat.

10. Küchengerät nach dem vorstehenden Anspruch, **dadurch gekennzeichnet, dass** die zumindest teilweise anorganisch ausgebildete Schicht porös ist.

11. Küchengerät nach einem der Ansprüche 9 oder 10, **dadurch gekennzeichnet, dass** die Festigkeit der zumindest teilweise anorganisch ausgebildeten Schicht und/oder die Festigkeit der mittels eines PVD-oder CVD-Verfahrens abgeschiedenen Schicht zumindest gleich, vorzugsweise größer ist als die Festigkeit des Substrats.

12. Küchengerät nach einem der Ansprüche 9 bis 11, **dadurch gekennzeichnet, dass** das Verbundmaterial in einem Wellenlängenbereich zwischen 400 und 750 nm einen Transmissionsverlauf aufweist, bei welchem sich das Minimum weniger als 0,6 Prozentpunkte vom Maximum unterscheidet.

13. Küchengerät nach einem der Ansprüche 9 bis 12, **dadurch gekennzeichnet, dass** das Substrat eine farbige Transmission aufweist, welche von einer farbigen Transmission der weiteren Schicht derart kompensiert ist, dass das Verbundmaterial eine im Wesentlichen farblose Transmission aufweist.

14. Küchengerät nach einem der Ansprüche 9 bis 13, **dadurch gekennzeichnet, dass** das Verbundmaterial derart ausgebildet ist, dass bei Transmission von weißem Licht das transmittierte Licht im L*a*b**-Farbraum auf der a*- und/oder b*-Achse einen Absolutwert von unter 20, vorzugsweise von unter 10, einnimmt.

## Claims

1. A method for producing a glass or glass ceramic composite material having at least two layers, comprising the steps of:
- providing a glass or glass ceramic substrate with a coefficient of thermal expansion of α ≤ 5 * 10⁻⁶ K⁻¹ (at 20 °C);
- applying a sol-gel layer onto said substrate, with nanoparticles being added to the material used for the sol-gel layer;
- patterning the sol-gel layer;
- thermally curing the patterned sol-gel layer;
- applying, onto the patterned sol-gel layer by a deposition process, at least one further layer, wherein a layer having a metallic appearance is deposited as said further layer.

2. The method for producing a composite material according to the preceding claim, **characterised in that** the further layer is deposited by a PVD or CVD process.

3. The method for producing a composite material according to any one of the preceding claims, **characterised in that** a layer that includes at least one semiconductor material is deposited as said further layer.

4. The method for producing a composite material according to the preceding claim, **characterised in that** the sol-gel layer is pre-cured before being patterned, in particular thermally or by a photochemical process.

5. The method for producing a composite material according to any one of the preceding claims, **characterised in that** nanoparticles are added to the material used for the patterned layer, in particular nanoparticles having a mean particle size between 0.1 and 1 µm.

6. The method for producing a composite material according to any one of the preceding claims, **characterised in that** the patterned layer is thermally cured at 50 to 1000 °C, preferably at 100 to 500 °C.

7. The method for producing a composite material according to any one of the preceding claims, **characterised in that** the patterned layer is created using an embossing tool, in particular an embossing stamp or a roller.

8. The method for producing a composite material according to any one of the preceding claims, **characterised in that** the volume ratio of particles to a precursor of the patterned layer is from 0.1 to 0.9, preferably from 0.5 to 0.8.

9. A kitchen appliance, comprising a composite material, said composite material comprising a glass or glass ceramic substrate on which an at least partially inorganic layer is disposed, wherein the at least partially inorganic layer is patterned, wherein the at least partially inorganic layer contains nanoparticles, wherein the at least partially inorganic layer has been produced from a sol, and wherein a further layer is disposed on the inorganic layer, which further layer was deposited by a PVD or CVD process, wherein said further layer has a metallic appearance.

10. The kitchen appliance according to the preceding claim, **characterised in that** the at least partially inorganic layer is porous.

11. The kitchen appliance according to any one of claims 9 or 10, **characterised in that** the strength of the at least partially inorganic layer and/or the strength of the layer deposited by a PVD or CVD process is at least equal to, preferably greater than the strength of the substrate.

12. The kitchen appliance according to any one of claims 9 to 11, **characterised in that** in a wavelength range from 400 to 750 nm the composite material exhibits a transmittance profile with a minimum differing by less than 0.6 percentage points from the maximum.

13. The kitchen appliance according to any one of claims 9 to 12, **characterised in that** the substrate exhibits a coloured transmittance which is compensated for by a coloured transmittance of the further layer such that the composite material exhibits a substantially colourless transmittance.

14. The kitchen appliance according to any one of claims 9 to 13, **characterised in that** the composite material is designed such that when transmitting white light the transmitted light has an absolute value of less than 20, preferably less than 10 on the a* axis and/or the b* axis in the L*a*b* colour space.

## Revendications

1. Procédé de fabrication d'un matériau composite en verre ou en vitrocéramique comprenant au moins deux couches, comprenant les étapes suivantes :
- fournir un substrat en verre ou en vitrocéramique présentant un coefficient de dilatation thermique α ≤ 5 x 10⁻⁶ K⁻¹ (à 20°C),
- appliquer une couche sol-gel sur le substrat, des nanoparticules étant ajoutées au matériau utilisé pour la couche sol-gel,
- structurer la couche sol-gel,
- durcir thermiquement la couche sol-gel structurée,
- appliquer au moins une autre couche au moyen d'un procédé de dépôt sur la couche sol-gel structurée, une couche présentant une apparence métallique étant déposée en tant que l'autre couche.

2. Procédé de fabrication d'un matériau composite selon la revendication précédente, **caractérisé en ce que** l'autre couche est déposée au moyen d'un procédé de dépôt en phase vapeur ou de dépôt chimique en phase vapeur.

3. Procédé de fabrication d'un matériau composite selon l'une quelconque des revendications précédentes, **caractérisé en ce qu'**une couche comprenant au moins un matériau à semi-conducteur est déposée en tant qu'autre couche.

4. Procédé de fabrication d'un matériau composite selon la revendication précédente, **caractérisé en ce que** la couche sol-gel est préalablement durcie avant la structuration, en particulier thermiquement ou au moyen d'un processus photochimique.

5. Procédé de fabrication d'un matériau composite selon l'une quelconque des revendications précédentes, **caractérisé en ce que** des nanoparticules, présentant en particulier une taille moyenne de particule comprise entre 0,1 et 1 µm, sont ajoutées au matériau utilisé pour la couche structurée.

6. Procédé de fabrication d'un matériau composite selon l'une quelconque des revendications précédentes, **caractérisé en ce que** la couche structurée est durcie thermiquement à une température allant de 50 à 1000°C, de préférence à une température allant de 100 à 500°C.

7. Procédé de fabrication d'un matériau composite selon l'une quelconque des revendications précédentes, **caractérisé en ce que** la couche structurée est fabriquée au moyen d'un outil d'estampage, en particulier au moyen d'un poinçon d'estampage ou d'un cylindre.

8. Procédé de fabrication d'un matériau composite selon l'une quelconque des revendications précédentes, **caractérisé en ce que** le rapport en volume des particules sur le produit semi-fini de la couche structurée atteint 0,1 à 0,9, de préférence 0,5 à 0,8.

9. Ustensile de cuisine, comprenant un matériau composite, dans lequel le matériau composite comprend un substrat en verre ou en vitrocéramique, sur lequel une couche au moins en partie anorganique est agencée, dans lequel la couche au moins en partie anorganique est structurée, dans lequel la couche au moins en partie anorganique contient des nanoparticules, dans lequel la couche au moins en partie anorganique est obtenue à partir d'un sol et dans lequel une autre couche déposée au moyen d'un procédé de dépôt en phase vapeur ou de dépôt chimique en phase vapeur est agencée sur la couche anorganique, dans lequel l'autre couche présente une apparence métallique.

10. Ustensile de cuisine selon la revendication précédente, **caractérisé en ce que** la couche au moins en partie anorganique est poreuse.

11. Ustensile de cuisine selon l'une des revendications 9 et 10, **caractérisé en ce que** la résistance de la couche au moins en partie organique et/ou la résistance de la couche déposée au moyen d'un procédé de dépôt en phase vapeur ou de dépôt chimique en phase vapeur est au moins identique, de préférence supérieure à la résistance du substrat.

12. Ustensile de cuisine selon l'une quelconque des revendications 9 à 11, **caractérisé en ce que** le matériau composite présente dans une plage de longueurs d'onde comprise entre 400 et 750 nm une variation de transmission pour laquelle le minimum se distingue de moins de 0,6 point de pourcentage du maximum.

13. Ustensile de cuisine selon l'une quelconque des revendications 9 à 12, **caractérisé en ce que** le substrat présente une transmission colorée, laquelle est compensée par une transmission colorée de l'autre couche de telle manière que le matériau composite présente une transmission sensiblement incolore.

14. Ustensile de cuisine selon l'une quelconque des revendications 9 à 13, **caractérisé en ce que** le matériau composite est conçu de telle manière que, lors d'une transmission d'une lumière blanche, la lumière transmise dans l'espace chromatique L*a*b** prend sur l'axe a* et/ou l'axe b* une valeur absolue inférieure à 20, de préférence inférieure à 10.
